# EUROPÄISCHE PATENTANMELDUNG

(11) **EP 0 539 840 A2**
(43) Veröffentlichungstag der Anmeldung: **05.05.1993**
(21) Anmeldenummer: 92117876.0
(22) Anmeldetag: 20.10.1992
(51) Int. Cl.: H04L 12/40

(54) **Verfahren und Schaltungsanordnung zur Datenblockübertragung über ein Bussystem**

(30) Priorität: 29.10.1991 DE 4135553
(71) Anmelder: Alcatel SEL Aktiengesellschaft, D-70435 Stuttgart (DE); ALCATEL N.V., NL-1077 XX Amsterdam (NL)
(72) Erfinder: Fiesel, Wolfgang, W-7145 Markgröningen (DE)
(74) Vertreter: Brose, Gerhard

(57) **Zusammenfassung**

Stand der Technik: Abwechselnde Übertragung von Adressen und Daten auf denselben Busleitungen.

Technisches Problem: Übertragung von Datenblöcken variabler Länge.

Grundgedanke: Eines der übrigen ohnehin vorhandenen Signale (chip-select, CS-, read, write) zeigt die Blocklänge an. Erster Zeitschlitz nach Setzen dieses Signals ist für eine Adresse (Anfangsadresse) bestimmt, alle folgenden Zeitschlitze bis zum Rücksetzen des Signals sind für Daten bestimmt.

Lösung: Ein Zähler (FF1, FF2, FF3) zählt die ersten Zeitschlitze eines Datenblocks ab und gibt der Reihe nach Empfänger (ZH, ZL) oder Sender für das erste (AH) und etwaige weitere (AL) Adressbytes, Sender oder Empfänger (MEM) für Daten (D1, D2, D3) und zuletzt einen Zähltakt (ZS) zur Erhöhung der Adresse frei. Zähler wird bei Blockende zurückgesetzt.

Vorteil: Bei Beginn der Übertragung eines Datenblocks muß dessen Länge noch nicht bekannt sein.

## Beschreibung

Die Erfindung betrifft ein Verfahren zum Übertragen von Datenblöcken über ein Bussystem mit gemeinsamen Leitungen für Adressen und Daten und eine Schaltungsanordnung zum Anschluß an ein solches Bussystem.

Es ist allgemein bekannt, mehrere Baugruppen oder Einheiten eines größeren Systems durch ein Bussystem untereinander zu verbinden. Ein solches Bussystem weist Leitungen für Adressen, Leitungen für Daten, Steuerleitungen und Taktleitungen auf. Auch die Leitungen zur Stromversorgung können zum Bussystem gezählt werden. Durch Anlegen einer Adresse an die Leitungen für Adressen kann eine bestimmte Baugruppe oder Einheit, oft auch eine darin enthaltene Unterbaugruppe oder Untereinheit, etwa ein einzelner Speicherplatz in einer Speicherbaugruppe, ausgewählt werden. Über die Steuerleitungen wird unter anderem entschieden, ob die ausgewählte Baugruppe Daten aufnehmen oder Daten abgeben soll. Die Daten werden dann über die Leitungen für Daten übertragen. Der zeitliche Ablauf wird über Steuerleitungen, Taktleitungen oder eine Kombination davon gesteuert.

Es sind auch Bussysteme bekannt, bei denen die Leitungen für die Adressen und die Leitungen für Daten identisch sind und Adressen und Daten zeitlich getrennt auftreten.

Ein Grund dafür ist der Wunsch, die Zahl der Leitungen und damit auch die Zahl der Anschlußstifte an Bauelementen und Steckern, letztlich also auch die äußeren Abmessungen, klein zu halten.

Ein weiterer Grund dafür liegt darin, daß zwischen Adresse und Daten gar nicht immer klar unterschieden werden kann. Einerseits kann die Auswahl einer Baugruppe durch Anlegen der Adresse bereits genügen, um in dieser Baugruppe eine ganz bestimmte Folge auszulösen, ohne daß dafür noch getrennte Steuerdaten erforderlich sind. Andererseits können Daten, die zu einer anderen Baugruppe übertragen wurden, dort wieder zur Adressierung von Unterbaugruppen Verwendung finden.

Auch ist bekannt, die Adressen in zwei Teile (z.B. höherwertiges und niederwertiges Byte) aufzuteilen und die beiden Teile nacheinander über dieselben Leitungen zu übertragen. In gleicher Weise ist es möglich, im Anschluß an die Übertragung einer Adresse einen ganzen Datenblock bestimmter Länge in Teilen nacheinander über dieselben Leitungen zu übertragen.

Der Erfindung liegt die Aufgabe zugrunde, einen Datenblock variabler Länge über ein solches Bussystem übertragen zu können.

Eine bekannte Lösung dieser Aufgabe liegt darin, im Anschluß an die Adresse zunächst ein Datenwort zu übertragen, das die Länge des aktuellen Datenblocks angibt und daran anschließend die eigentlichen Daten zu übertragen.

Gemäß der Erfindung wird die Aufgabe gelöst durch ein Verfahren nach der Lehre des Anspruchs 1 und eine Schaltungsanordnung nach der Lehre des Anspruchs 5.

Vorteilhafte Ausgestaltungen der Erfindung sind den Unteransprüchen zu entnehmen.

Gemäß dem Grundgedanken der vorliegenden Erfindung zeigt eines der übrigen ohnehin vorhandenen Signale (chip select, read, write) die Blocklänge an. Der erste Zeitschlitz nach Setzen dieses Signals ist für eine Adresse (Anfangsadresse) bestimmt, alle folgenden Zeitschlitze bis zum Rücksetzen des Signals sind für Daten bestimmt.

Näher beschrieben wird ein Beispiel, bei dem ein Zähler die ersten Zeitschlitze eines Datenblocks abzählt und der Reihe nach Empfänger für das erste und ein weiteres Adressbyte, Empfänger oder Sender für Daten und zuletzt einen Zähltakt zur Erhöhung der Adresse freigibt. Bei Blockende wird der Zähler zurückgesetzt.

Diese Lösung hat auch den Vorteil, daß bei Beginn der Übertragung eines Datenblocks dessen Länge noch nicht bekannt sein muß.

Die Erfindung wird im folgenden anhand eines Ausführungsbeispiels unter Zuhilfenahme der beiliegenden Zeichnung weiter erläutert.
- Fig. 1: zeigt ein Blockschaltbild einer erfindungsgemäßen Schaltungsanordnung.
- Fig. 2: zeigt ein Impulsdiagramm für die nach dem erfindungsgemäßen Verfahren betriebene Schaltungsanordnung nach Fig. 1.

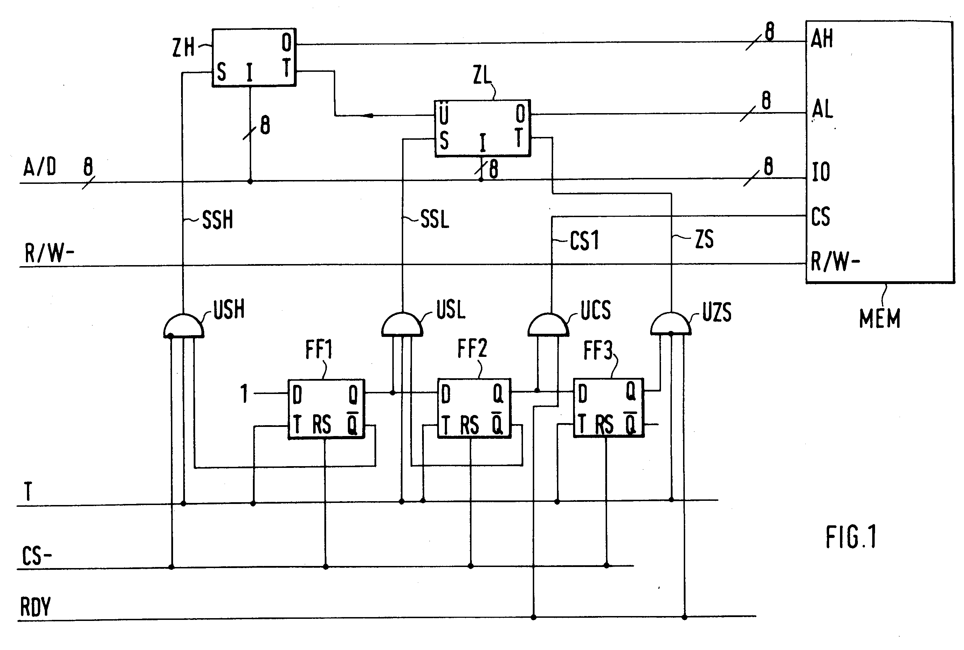

Die Schaltungsanordnung nach Fig. 1 zeigt ein Bussystem, bestehend aus acht Adress- und Datenleitungen, A/D, einer Schreib-Lese-Leitung, R/W-, einer Taktleitung, T, einer Chip-Select-Leitung, CS-, und einer Leitung für ein zusätzliches Signal, Bereitschaftsleitung RDY, das anzeigt, wann tatsächlich gültige Daten zur Übertragung an das Bussystem angelegt sind. Im folgenden werden für die Signale auf diesen Leitungen dieselben Symbole verwendet, wie für die Leitungen selbst. Auch die Bezeichnungen der Signale entsprechen den Bezeichnungen der Leitungen, beispielsweise also Taktsignal für das Signal auf der Taktleitung. (Als Symbol für die Invertierung wird hier ein nachgestelltes Minuszeichen verwendet und nicht wie üblich ein darüberliegender Querstrich.)

Weiter weist die Schaltungsanordnung nach Fig. 1 drei Flip-Flops, FF1, ..., FF3, zwei setzbare Zähler, ZH und ZL, einen Speicher, MEM, sowie vier UND-Gatter, USH, USL, UCS und UZS, auf.

Unter Zuhilfenahme beider Figuren wird nun der weitere Aufbau der Schaltungsanordnung sowie deren Betrieb beschrieben:
Das Chip-Select-Signal, CS-, wird hier als dasjenige Signal mitverwendet, das erfindungsgemäß die Länge eines Datenblocks anzeigt. Im vorliegenden Beispiel wird angenommen, daß pro Datenblock auf den gemeinsamen Adress- und Datenleitungen A/D zunächst ein höherwertiges Adressbyte, AH, dann ein niederwertiges Adressbyte, AL, und anschließend eine Reihe von Datenbytes, D1, D2, ..., übertragen werden. Dabei soll zulässig sein, daß innerhalb des Datenblocks auch Wartezeiten auftreten. Die Zeiten, in denen tatsächlich Datenbytes vorliegen, werden deshalb durch das Bereitschaftssignal, RDY, angezeigt.

Die drei Flip-Flops FF1, FF2 und FF3 werden verwendet, um den Ablauf des ersten, zweiten und dritten Taktintervalls nach Beginn eines Datenblocks anzuzeigen. Diese Flip-Flops weisen je einen Rücksetzeingang RS, einen Takteingang T, eine Dateneingang D, einen (nichtinvertierenden) Ausgang Q und einen invertierenden Ausgang Q-auf. Solange der Rücksetzeingang RS auf logisch "1" liegt, ist der Ausgang Q auf logisch "0"; ist der Rücksetzeingang RS dagegen auf logisch "0", so wird mit jedem Übergang von logisch "1" auf logisch "0" am Takteingang T der am Dateneingang D anliegende logische Wert an den Ausgang Q übernommen.

Durch Verbinden der Rücksetzeingänge RS der drei Flip-Flops mit der Chip-Select-Leitung CS- sind die Flip-Flops gesperrt, solange kein Datenblock übertragen wird. Der Dateneingang D des ersten Flip-Flops, FF1, liegt stets auf logisch "1". Die Dateneingänge D der nachfolgenden Flip-Flops FF2 und FF3 sind jeweils mit dem Ausgang Q des vorangehenden Flip-Flops FF1 bzw. FF2 verbunden. Die Takteingänge T sind mit der Taktleitung T verbunden. Die Flip-Flops zeigen damit an, wenn der erste (FF1), der zweite (FF2) und der dritte (FF3) Taktimpuls auf der Taktleitung T nach Freigabe durch das Chip-Select-Signal CS- vorbei ist.

Das UND-Gatter USH ist über einen invertierenden Eingang mit der Chip-Select-Leitung CS- und über zwei nichtinvertierende Eingänge mit der Taktleitung T und dem invertierenden Ausgang Q- des ersten Flip-Flops FF1 verbunden. Sein Ausgang gibt damit den ersten Taktimpuls nach Beginn des Datenblocks als Setzsignal SSH für das höherwertige Adressbyte an einen Setzeingang S des setzbaren Zählers ZH weiter. Dieser Zähler ZH weist weiter acht Dateneingänge I auf, die mit den acht Adress- und Datenleitungen A/D verbunden sind. Weiter weist der Zähler ZH einen Takteingang T, acht Datenausgänge 0 und einen hier nicht eingezeichneten Übertragsausgang Ü auf.

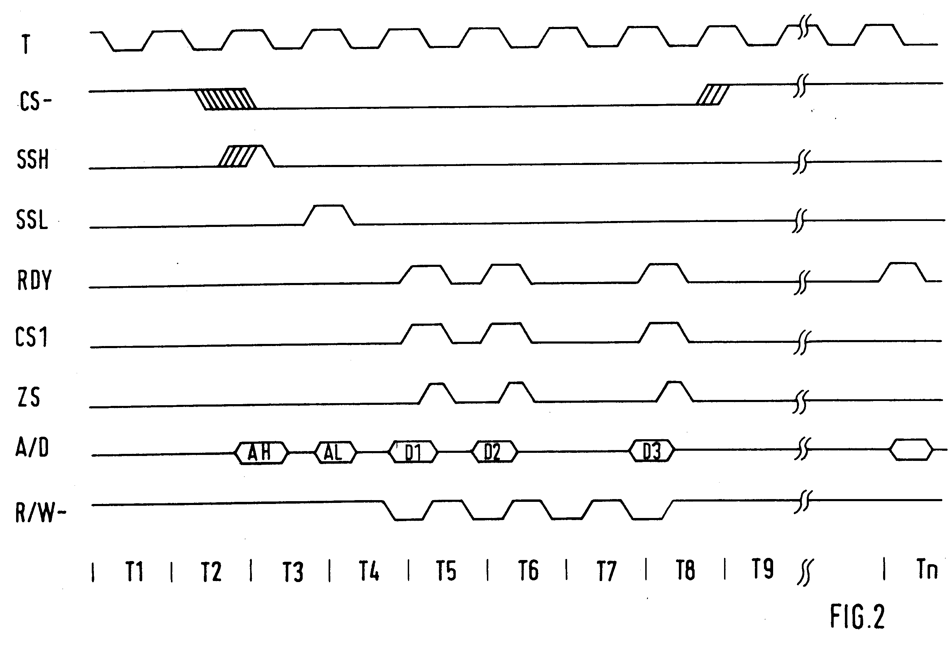

Fig. 2 zeigt die verschiedenen Signale für verschiedene Taktintervalle T1, ..., T9 und Tn. Nachdem im Taktintervall T2 das Chip-Select-Signal aktiviert wurde, CS- = 0, wird im Taktintervall T3 das höherwertige Adressbyte AH mit der fallenden Flanke des Setzsignals SSH in den Zähler übernommen.

Das UND-Gatter USL weist drei nichtinvertierende Eingänge auf, die mit dem Ausgang Q des ersten Flip-Flops FF1, dem invertierenden Ausgang Q- des zweiten Flip-Flops FF2 bzw. der Taktleitung T verbunden sind. Sein Ausgang ist mit dem Setzeingang S des Zählers ZL verbunden, der gleich aufgebaut ist, wie der Zähler ZH. Damit wird der zweite Taktimpuls auch Beginn des Datenblocks als Setzsignal SSL für das niederwertige Adressbyte AL zur Übernahme des niederwertigen Adressbytes AL in den Zähler ZL weitergegeben. Dies erfolgt im Taktinterval T4.

In den anschließenden Taktintervallen können Datenbytes übertragen werden. Hierzu wird das Bereitschaftssignal RDY mit dem Ausgangssignal des Flip-Flops FF2 durch das UND-Gatter UCS zu einem neuen Chip-Select-Signal CS1 für den Speicher MEM zusammengefaßt:
Der Speicher MEM weist acht Adressengänge AH für das höherwertige Adressbyte auf, die mit den Ausgängen 0 des Zählers ZH verbunden sind; er weist acht Adresseingänge AL für das niederwertige Adressbyte auf, die mit den Ausgängen 0 des Zählers ZL verbunden sind; er weist acht Datenein- und -ausgänge IO auf, die mit den Adress- und Datenleitungen A/D verbunden sind; er weist einen Chip-Select-Eingang CS auf, der mit dem Ausgang des UND-Gatters UCS verbunden ist; und er weist einen Steuereingang R/W- auf, der mit der Schreib-Lese-Leitung R/W- verbunden ist.

In den Taktintervallen T5, T6 und T8 wird nun jeweils ein Datenbyte in den Speicher MEM eingeschrieben oder aus diesem ausgelesen. Die Richtung wird durch das Schreib-Lese-Signal R/W- vorgegeben, im Beispiel nach Fig. 2 werden Daten eingeschrieben. Nach jedem eingeschriebenen oder ausgelesenen Datenbyte muß die Adresse um eins erhöht werden. Hierzu wird durch das UND-Gatter UZS aus dem Ausgangssignal des Flip-Flops FF3, dem invertierten Takt und dem Bereitschaftssignal RDY ein Zählsignal ZS erzeugt und dem Takteingang des Zählers ZL zugeführt. Der Übertragsausgang Ü des Zählers ZL ist mit dem Takteingang T des Zählers ZH verbunden.

Auf diese Weise können in beliebig vielen folgenden Taktintervallen Datenbytes in der einen oder anderen Richtung übertragen werden. Gegebenenfalls können, wie im Beispiel im Taktintervall T7, Pausen auftretgen. Im gezeigten Beispiel könnte sogar die Übertragungsrichtung durch das Schreib-Lese-Siganl R/W- innerhalb des Datenblocks umgekehrt werden, wofür aber keine praktische Bedeutung erkennbar ist. Liegen in der die Daten sendenden Stelle keine Daten mehr vor, was hier am Ende des Zeitintervalls T8 der Fall ist, so wird das Ende des Datenblocks durch das wieder auf logisch "1" gehende Chip-Select-Signal CS- angezeigt. Die Flip-Flops werden zurückgesetzt; weitere Daten, wie hier im Taktintervall Tn, bleiben unberücksichtigt.

Im folgenden werden einige Abwandlungsmöglichkeiten des beschriebenen Beispiels aufgezeigt, um den Anwendungsbereich der vorliegenden Erfindung zu verdeutlichen:
Durch Weglassen des Flip-Flops FF2, des UND-Gatters USL und des Zählers ZL könnte der Adressumfang auf ein Adressbyte reduziert werden. Der Dateneingang D des Flip-Flops FF3 müßte dann mit dem Ausgang des Flip-Flops FF1 und der Takteingang T des Zählers ZH mit dem Ausgang des UND-Gatters UZS verbunden werden.

Umgekehrt könnte der Adressbereich jeweils um ein Byte erhöht werden, indem je ein weiteres Flip-Flop, ein weiteres UND-Gatter und ein weiterer Zähler eingefügt werden.

Die Verzögerung des Zählsignals ZS durch das Flip-Flop FF3 bis nach dem ersten übertragenen Datenbyte könnte unterbleiben, wenn stattdessen anstelle der Anfangsadresse der um "eins" verminderte Adressenwert übertragen würde.

Häufig wird aus der anliegenden Adresse zunächst ein Auswahlsignal nach Art des Chip-Select-Signals gebildet. Dieses Auswahlsignal müßte dann mit einem anderen, die Datenblocklänge anzeigenden Signal verknüpft werden und an die Stelle des im Beispiel verwendeten Chip-Select-Signals CS- treten. Als ein anderes, die Datenblocklänge anzeigendes Signal käme natürlich auch ein separates Blocklängensignal infrage. Es werden hier aber auch voneinander getrennte Schreib- und Lesesignale vorgeschlagen, die einerseits die Übertragungsrichtung und andererseits die Blocklänge anzeigen. Ein aus diesen getrennten Signalen durch eine ODER-Schaltung gebildetes Signal würde dann die Blocklänge anzeigen. Die Schreib- und Lesesignale müßten gegebenenfalls mit dem Taktsignal verknüpft werden.

Anstelle der gezeigten Bauelemente könnten auch andere treten, die dieselben Funktion erfüllen; insbesondere könnten die Funktionen der UND-Gatter auch durch passend beschaltete Inverter, NAND- und NOR-Gatter ausgeübt werden.

Die Flip-Flops und die UND-Gatter haben zumindest teilweise die Funktion eines Zählers und eines Decoders und könnten insoweit auch durch solche ersetzt werden.

Anstelle des Speichers MEM könnte jede andere Schaltung treten, die Datenblöcke adressierbar aufnimmt oder abgibt. Soll diese Schaltung auch die erforderlichen Adressen auf die Adress- und Datenleitungen geben können, so müssen die Zähler ZH und ZL beispielsweise durch Pufferschaltungen ersetzt werden, die durch die Setzsignale (dann mit anderem Namen) SSH und SSL zu den Adress- und Datenleitungen hin aktiviert werden. Durch jeweils parallel geschaltete Zähler und Pufferschaltungen könnten Adressen in beiden Richtungen übertragen werden. Für eine geeignete Umschaltung müßte dann gesorgt werden. Wenn die Adressen wahlweise vom Bussystem her kommen oder mittels einer erfindungsgemäßen Schaltungsanordnung zum Bussystem hin gelangen, so liegt es nahe, auch die übrigen Steuersignale wie Schreib-Lese-Signal und Bereitschaftssignal in gleicher Weise in ihrer Herkunft umzuschalten. Insoweit liegt dann aber eine übliche Anordnung mit mehreren zwischen Mutter und Tochter (Master und Slave) umschaltbaren Baugruppen vor, wofür übliche Schiedsrichterverfahren verwendbar sind.

Die erfindungsgemäße Schaltunganordnung, die eine Schnittstellenschaltung zwischen kombinierten Adress- und Datenleitungen einerseits und getrennten Adress- und Datenleitungen andererseits darstellt, kann auch ganz oder teilweise mit der an das Bussystem anzuschließenden Schaltung (im Beispiel dem Speicher MEM) baulich oder funktionell verbunden werden. Insbesondere können einzelne Funktionen auch programmgesteuert ablaufen.

## Patentansprüche

1. Verfahren zum Übertragen von Datenblöcken über ein Bussystem mit gemeinsamen Leitungen (A/D) für Adressen und Daten, **dadurch gekennzeichnet,** daß die Länge eines Datenblocks durch eines der übrigen Signale (CS-) auf dem Bussystem angezeigt wird.

2. Verfahren nach Anspruch 1, dadurch gekennzeichnet, daß als Signal zum Anzeigen der Länge eines Datenblocks das chip select-(CS-), read- oder write-Signal verwendet wird.

3. Verfahren nach Anspruch 1, dadurch gekennzeichnet, daß nach dem Setzen des zum Anzeigen der Länge eines Datenblocks verwendeten Signals (CS-) zunächst eine Adresse (AH, AL) als Anfangsadresse übertragen wird und daß die daran anschließende Zeit (T5, ..., T8) bis zum Rücksetzen des Signals der Übertragung von Daten (D1, D2, D3) vorbehalten ist.

4. Verfahren nach Anspruch 1, dadurch gekennzeichnet, daß ein zusätzliches Signal (RDY) anzeigt, wann tatsächlich gültige Daten zur Übertragung an das Bussystem angelegt sind.

5. Schaltungsanordnung zum Anschluß an ein Bussystem mit gemeinsamen Leitungen (A/D) für Adressen und Daten, zum Zweck der Übertragung von Datenblöcken,
**dadurch gekennzeichnet,** daß sie eine Zähl- und Decodiereinrichtung (FF1, FF2, FF3, USH, USL, UCS, UZS) aufweist, daß die Zähl- und Decodiereinrichtung durch ein auf einer Leitung (CS-) des Bussystems anliegendes, die Länge eines Datenblocks anzeigendes Signal (CS-) zu Beginn des Datenblocks freigegeben, dann durch ein auf einer Taktleitung (T) des Bussytems anliegendes Taktsignal (T) bis zu einem Zählerendstand hin weitergeschaltet und am Ende des Datenblocks wieder blockiert und rückgesetzt wird und daß die Zähl- und Decodiereinrichtung zu Beginn des Datenblocks die Adressübertragung und anschließend die Datenübertragung freigibt.

6. Schaltungsanordnung nach Anspruch 5, dadurch gekennzeichnet, daß ein setzbarer Zähler (ZH, ZL) vorhanden ist, in den zu Beginn des Datenblocks eine Anfangsadresse (AH, AL) von den gemeinsamen Leitungen (A/D) für Adressen und Daten eingebbar ist und daß dieser Zähler nach jedem übertragenen Datenbyte (D1, D2, D3) durch ein aus dem Taktsignal (T) abgeleitetes Zählsignal (ZS) weitergeschaltet wird.

7. Schaltungsanordnung nach Anspruch 5, dadurch gekennzeichnet, daß eine Pufferschaltung vorhanden ist, die zu Beginn des Datenblocks eine Anfangsadresse auf die gemeinsamen Leitungen für Adressen und Daten durchschaltet.
